# EUROPEAN PATENT APPLICATION

(11) **EP 4 517 782 A1**
(43) Date of publication of application: **05.03.2025**
(21) Application number: 23796208.9
(22) Date of filing: 19.04.2023
(51) Int. Cl.: H01B 1/24, C01B 32/174, H01M 4/131, H01M 4/1391, H01M 4/62

(54) **CONDUCTIVE MATERIAL LIQUID DISPERSION, POSITIVE ELECTRODE SLURRY, METHOD FOR MANUFACTURING POSITIVE ELECTRODE FOR NONAQUEOUS ELECTROLYTE SECONDARY BATTERY, POSITIVE ELECTRODE FOR NONAQUEOUS ELECTROLYTE SECONDARY BATTERY, AND NONAQUEOUS ELECTROLYTE SECONDARY BATTERY**

(30) Priority: 28.04.2022 JP 2022074584
(71) Applicant: Panasonic Intellectual Property Management Co., Ltd., Osaka-shi, Osaka 540-6207 (JP)
(72) Inventor: MASAHARA, Koh, Kadoma-shi, Osaka 571-0057 (JP); HARADA, Tomohiro, Kadoma-shi, Osaka 571-0057 (JP); UKA, Youichirou, Kadoma-shi, Osaka 571-0057 (JP); KURODA, Kosuke, Kadoma-shi, Osaka 571-0057 (JP); YOSHINARI, Rina, Kadoma-shi, Osaka 571-0057 (JP)
(74) Representative: Novagraaf International SA
(86) International application number: PCT/JP2023/015667
(87) International publication number: WO 2023/210466

(57) **Abstract**

This conductive material liquid dispersion which is an example of an embodiment contains a conductive material, a dispersant, and an aprotic polar solvent. The conductive material has carbon nanotubes as a main component, and the dispersant contains nitrile rubber. The volume-based median diameter of the conductive material in a state dispersed in the polar solvent is less than 3 µm.

## Description

### TECHNICAL FIELD

The present disclosure relates to a conductive agent dispersion, a positive electrode slurry including the conductive agent dispersion, a method for manufacturing a positive electrode for a non-aqueous electrolyte secondary battery using the positive electrode slurry, a positive electrode for a non-aqueous electrolyte secondary battery manufactured by using the positive electrode slurry, and a non-aqueous electrolyte secondary battery including the positive electrode.

### BACKGROUND ART

Non-aqueous electrolyte secondary batteries such as lithium-ion batteries are widely used in recent years in use requiring high durability and high energy density, such as electronic devices and on-board use. To achieve the higher durability and the higher energy density of the battery, it is important to reduce direct current resistance (DCIR) of the battery. Since an electrode, which is a major constituent of the non-aqueous electrolyte secondary battery, significantly affects these performances, many investigations have been made on the electrode.

The electrode, specifically a positive electrode, commonly contains a conductive agent in order to form a conductive path in the electrode plate. The electrode is manufactured by applying a slurry including an active material, a binder, and the conductive agent on a core such as metal foil, and compressing the coating film to form a mixture layer on both surfaces of the core. This slurry is prepared by using a conductive agent dispersion in which the conductive agent is dispersed in advance. It has been found that performance of the conductive agent dispersion significantly affects DCIR of the finally obtained electrode.

Accordingly, many investigations have been made also on the conductive agent dispersion. For example, Patent Literature 1 discloses a conductive agent dispersion using carbon nanotube (CNT) as the conductive agent. The dispersion in Patent Literature 1 has a feature of particle size distribution of CNT having D50 of greater than or equal to 3 µm and less than or equal to 10 µm. Patent Literature 1 discloses that producing an electrode using this dispersion reduces DCIR when a charge depth (SOC) of the battery is 50%.

### CITATION LIST

### PATENT LITERATURE

PATENT LITERATURE 1: Japanese Translation of PCT International Application Publication No. 2018-522803

### SUMMARY

As disclosed in Patent Literature 1, the effect of reducing DCIR is expected by adding CNT into the electrode. Meanwhile, it has been found from results of investigation by the present inventors that, when the electrode is produced by using the dispersion in Patent Literature 1, DCIR may be reduced in a state of SOC being 50% but the effect of reducing DCIR cannot be obtained or DCIR conversely increases in a low SOC state such as SOC being 10%. To achieve high discharge capacity retention of the battery, it is important to reduce DCIR having low SOC.

A conductive agent dispersion according to the present disclosure is a conductive agent dispersion including: a conductive agent; a dispersant; and an aprotic polar solvent, wherein the conductive agent contains carbon nanotube as a main component, the dispersant includes nitrile rubber, and a volume-based median diameter of the conductive agent in a dispersing state in the polar solvent is less than 3 µm.

A positive electrode slurry for a non-aqueous electrolyte secondary battery according to the present disclosure includes: the above conductive agent dispersion; and a lithium-containing transition metal oxide.

A method for manufacturing a positive electrode for a non-aqueous electrolyte secondary battery according to the present disclosure is a method for manufacturing a positive electrode for a non-aqueous electrolyte secondary battery using the positive electrode slurry, and the method comprises: applying the positive electrode slurry on a surface of a positive electrode core; and drying a coating film to form a positive electrode mixture layer.

According to the conductive agent dispersion of the present disclosure, the non-aqueous electrolyte secondary battery to yield reduced DCIR even with low SOC may be achieved. Particularly, the non-aqueous electrolyte secondary battery comprising the positive electrode manufactured by using the conductive agent dispersion according to the present disclosure may reduce DCIR with not only SOC of 50% but also SOC of as low as 10%, and has high discharge capacity retention.

### DESCRIPTION OF EMBODIMENTS

As noted above, it is important to reduce the direct current resistance (DCIR) of the battery in order to achieve the higher durability and the higher energy density of the battery. Specifically, it is difficult to achieve the high discharge capacity retention if low DCIR cannot be achieved even with SOC of as low as 10%. Thus, the conductive agent dispersion in Patent Literature 1, which increases DCIR in the low SOC state, still has room for improvement from the viewpoint of the higher durability of the battery.

As the results of investigation by the present inventors, it has been found that a conductive agent (CNT) in a conductive agent dispersion having a volume-based median diameter of greater than or equal to 3 µm may reduce DCIR in a state of SOC being 50% but considerably increase DCIR in a low SOC state. It has been ascertained that DCIR of the battery may be effectively reduced even with a low SOC by using a conductive agent dispersion having the median diameter regulated to less than 3 µm. It is also found that the effect of reducing DCIR is not obtained even with regulating the median diameter of CNT to less than 3 µm if the conductive agent dispersion does not include nitrile rubber.

That is, it is needed that the conductive agent dispersion containing CNT as a main component of the conductive agent includes the nitrile rubber as a dispersant, and the volume-based median diameter of the conductive agent (CNT) in a dispersing state in the polar solvent is regulated to less than 3 µm. It is considered that the good dispersing state of CNT is stably retained until manufacture of the electrode in this case, and DCIR of the non-aqueous electrolyte secondary battery manufactured by using this dispersion may be specifically reduced.

Hereinafter, an example of embodiments of the conductive agent dispersion, the positive electrode slurry, and the method for manufacturing a positive electrode according to the present disclosure, and the positive electrode and the non-aqueous electrolyte secondary battery manufactured by using the conductive agent dispersion according to the present disclosure will be described in detail. The present disclosure includes constitution by selectively combining a plurality of embodiments and modified examples described hereinafter.

### [Non-Aqueous Electrolyte Secondary Battery]

The non-aqueous electrolyte secondary battery comprises an electrode, a non-aqueous electrolyte, and an exterior housing the electrode and the non-aqueous electrolyte. The exterior is, for example, a bottomed cylindrical metallic exterior housing can. On an opening of the exterior housing can, a sealing assembly is attached via a gasket. The non-aqueous electrolyte secondary battery according to the present disclosure is not limited to the cylindrical battery comprising the cylindrical exterior housing can, and may be a rectangular battery comprising a rectangular exterior housing can, a coin-shaped battery comprising a coin-shaped exterior housing can, a laminate battery comprising an exterior composed of a laminate sheet including a metal layer and a resin layer, or the like.

The electrode of the non-aqueous electrolyte secondary battery is manufactured by using a conductive agent dispersion of the present embodiment (hereinafter, referred to as "dispersion (D)"). The electrode includes a positive electrode and a negative electrode. Although both the positive electrode and the negative electrode may be manufactured by using the dispersion (D), the positive electrode is particularly preferably manufactured. The positive electrode is manufactured by using a positive electrode slurry including the dispersion (D) and a lithium-containing transition metal oxide. The non-aqueous electrolyte secondary battery typically comprises an electrode assembly including the positive electrode, the negative electrode, and a separator, and the positive electrode and the negative electrode are arranged opposite to each other via the separator. The electrode assembly may have a spirally wound structure, or may have a stacked structure in which a plurality of the positive electrodes and a plurality of the negative electrodes are alternately stacked via the separator.

### (Positive Electrode)

The positive electrode includes a positive electrode core and a positive electrode mixture layer formed on a surface of the positive electrode core. For the positive electrode core, foil of metal stable within a potential range of the positive electrode, such as aluminum and an aluminum alloy, a film in which such a metal is arranged on a surface layer, or the like may be used. The positive electrode mixture layer includes a positive electrode active material, the conductive agent, and a binder, and is preferably formed on both surfaces of the positive electrode core. An example of a thickness of the positive electrode mixture layer is greater than or equal to 50 µm and less than or equal to 150 µm on one side of the positive electrode core. The positive electrode may be produced by applying the positive electrode slurry including the positive electrode active material, the conductive agent, the binder, and the like on the positive electrode core, and drying and then compressing the coating film to form a positive electrode mixture layer on both the surfaces of the positive electrode core.

The positive electrode mixture layer includes lithium-containing transition metal oxide particles as the positive electrode active material. The lithium-containing transition metal oxide is a composite oxide containing a metal element such as Co, Mn, Ni, and Al in addition to Li. The metal element constituting the lithium-containing transition metal oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide include: a lithium-containing transition metal oxide containing Ni, Co, and Mn; and a lithium-containing transition metal oxide containing Ni, Co, and Al.

A volume-based median diameter (D50) of the positive electrode active material is, for example, greater than or equal to 1 µm and less than or equal to 25 µm, and preferably greater than or equal to 3 µm and less than or equal to 20 µm. The D50 means a particle diameter at which a cumulative frequency is 50% from a smaller particle diameter side in volume-based particle size distribution, which is also referred to as "median diameter". The particle size distribution of the positive electrode active material may be measured by using a laser diffraction-type particle size distribution measuring device (for example, MT3000, manufactured by MicrotracBEL Corp.) with water as a dispersion medium. A content rate of the positive electrode active material is, for example, greater than or equal to 90 mass% and less than or equal to 99.5 mass% relative to a mass of the positive electrode mixture layer.

The positive electrode mixture layer includes at least CNT as the conductive agent. CNT forms a good conductive path in the positive electrode mixture layer to reduce DCIR of the battery with addition at a small amount, and is preferable for the higher durability and the higher energy density. The positive electrode mixture layer may include a conductive agent other than CNT, for example, carbon black such as acetylene black and Ketjenblack, graphite, and carbon fiber other than CNT such as carbon nanofiber and graphene. Note that the main component of the conductive agent is preferably CNT, and the positive electrode mixture layer may include substantially only CNT as the conductive agent. A preferable content rate of the conductive agent is, for example, greater than or equal to 0.01 mass% and less than or equal to 10 mass%, and more preferably greater than or equal to 0.2 mass% and less than or equal to 1 mass% relative to the mass of the positive electrode mixture layer.

Examples of the binder included in the positive electrode mixture layer may include fluorine-containing resins such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination. A content rate of the binder is, for example, greater than or equal to 0.1 mass% and less than or equal to 10 mass%, and more preferably greater than or equal to 0.5 mass% and less than or equal to 5 mass% relative to the mass of the positive electrode mixture layer 31.

### (Negative Electrode)

The negative electrode includes a negative electrode core and a negative electrode mixture layer formed on a surface of the negative electrode core. For the negative electrode core, foil of metal stable within a potential range of the negative electrode, such as copper and a copper alloy, a film in which such a metal is arranged on a surface layer, or the like may be used. The negative electrode mixture layer includes a negative electrode active material, a binder, and as necessary a conductive agent, and preferably formed on both surfaces of the negative electrode core. A thickness of the negative electrode mixture layer is, for example, greater than or equal to 30 µm and less than or equal to 150 µm on one side of the negative electrode core. The negative electrode may be produced by applying the negative electrode slurry including the negative electrode active material, the binder, and the like on the negative electrode core, and drying and then compressing the coating film to form a negative electrode mixture layer on both the surfaces of the negative electrode core.

The negative electrode mixture layer includes a carbon-based active material that reversibly occludes and releases lithium ions as the negative electrode active material. A preferable carbon-based active material is graphite such as: natural graphite such as flake graphite, massive graphite, and amorphous graphite; and artificial graphite such as massive artificial graphite (MAG) and graphitized mesophase carbon microbead (MCMB). For the negative electrode active material, a Si-based active material containing Si may be used from the viewpoints of increase in the energy density and the like.

For the binder included in the negative electrode mixture layer, PAN, a polyimide, an acrylic resin, a polyolefin, styrene-butadiene rubber (SBR), and the like may be used, for example. The negative electrode mixture layer may include CMC or a salt thereof, polyacrylic acid (PAA) or a salt thereof, polyvinyl alcohol (PVA), or the like. Into the negative electrode mixture layer, the conductive agent such as CNT may be added particularly when the Si-based active material is used. When CNT is added into the negative electrode mixture layer, the negative electrode may be manufactured by using a negative electrode slurry including the dispersion D.

### (Non-Aqueous Electrolyte)

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen atoms in these solvents are at least partially substituted with halogen atoms such as fluorine. An example of the non-aqueous solvent includes ethylene carbonate (EC), ethyl methyl carbonate (EMC), dimethyl carbonate (DMC), and a mixed solvent thereof. For the electrolyte salt, a lithium salt such as LiPF₆ is used, for example. The non-aqueous electrolyte is not limited to a liquid electrolyte, and may be a solid electrolyte.

Hereinafter, the dispersion (D) and the positive electrode slurry used for manufacturing the positive electrode of the non-aqueous electrolyte secondary battery will be described in detail.

### [Conductive Agent Dispersion]

The dispersion (D) includes the conductive agent, a dispersant, and an aprotic polar solvent. The dispersion (D) is added into the positive electrode slurry used for manufacturing the positive electrode for a non-aqueous electrolyte secondary battery, and the conductive agent contained in the dispersion (D) constitutes the mixture layer of the positive electrode to form a conductive path in the mixture layer. In the dispersion (D), the dispersant is dissolved in the polar solvent, and the conductive agent is dispersed in the polar solvent by an effect of the dispersant. A concentration of a solid-content (the conductive agent and the dispersant) in the dispersion (D) is, for example, greater than or equal to 0.1 mass% and less than or equal to 20 mass%. The concentration is preferably greater than or equal to 0.2 mass% and less than or equal to 15 mass%, and more preferably greater than or equal to 1 mass% and less than or equal to 10 mass% from the viewpoints of achievement of both a dispersing property of CNT and productivity, and the like.

Although a detail will be described later, the conductive agent contains CNT as a main component, and the dispersant includes nitrile rubber. A volume-based median diameter of the conductive agent in a dispersing state in the polar solvent is less than 3 µm. CNT easily aggregates, and when the positive electrode is manufactured by using a dispersion including the aggregated CNT, CNT forms an aggregating state also in the positive electrode mixture layer to hardly form the good conductive path. It is considered that the good dispersing state of CNT is stably retained until manufacture of the positive electrode according to the dispersion (D), and thereby DCIR of the battery may be effectively reduced when the positive electrode is manufactured by using the dispersion (D).

The main component of the conductive agent herein means a component at the highest mass proportion among the components constituting the conductive agent. Although CNT forms the good conductive path in the positive electrode mixture layer to reduce DCIR of the battery by addition at a small amount, a mass proportion of CNT in the conductive agent is preferably greater than or equal to 50 mass%.

### (Conductive Agent)

As noted above, the conductive agent includes at least CNT, and contains CNT as the main component. The conductive agent may include conductive carbon particles, such as carbon black, and a conductive fibrous carbon material other than CNT, such as graphene and carbon fiber, but the mass proportion of CNT in the conductive agent is preferably greater than or equal to 50 mass%, and more preferably greater than or equal to 66%. The dispersion (D) may contain substantially only CNT as the conductive agent.

CNT is a conductive carbon fiber having a diameter (outer diameter) of less than or equal to 100 nm, and having an extremely large aspect ratio (a ratio of a fiber length relative to the fiber diameter). The aspect ratio of CNT is, for example, greater than or equal to 20, and preferably greater than or equal to 50. According to CNT having a high aspect ratio, contact between the active material and the core is not point contact but linear contact. Thus, the good conductive path is formed by addition at a small amount.

The average fiber diameter (outer diameter) of CNT is, for example, less than or equal to 20 nm, and may be less than or equal to 15 nm. Note that the fiber diameter means a length in a direction perpendicular to a fiber length direction. The average fiber diameter of less than or equal to 20 nm more effectively reduces DCIR. A lower limit of the average fiber diameter of CNT is not particularly limited, and an example thereof is 1 nm. The average fiber diameter of CNT may be determined by image analysis using a transmission electron microscope (TEM). The average fiber diameter of CNT is determined by randomly selecting 100 CNTs to measure the fiber diameters, and arithmetically averaging the measured values.

The average fiber length of CNT is, for example, greater than or equal to 0.5 µm, and may be greater than or equal to 1 µm. The fiber length means a length when CNT is linearly straightened. The average fiber length of greater than or equal to 0.5 µm more effectively reduces DCIR. An upper limit of the average fiber length of CNT is not particularly limited, and an example thereof is 100 µm. The average fiber length of CNT may be determined by image analysis using a scanning electron microscope (SEM). The average fiber length of CNT is determined by randomly selecting 100 CNTs to measure the lengths, and arithmetically averaging the measured values.

CNT may be any of single-wall CNT (SWCNT) and multi-wall CNT (MWCNT), and SWCNT and MWCNT may be used in combination as the conductive agent. SWCNT has a structure in which one layer of a graphite sheet forms a tube shape, and the multi-wall CNT has a structure in which a multilayer of graphite sheets forms a tube shape. An example of the multi-wall CNT is bilayer CNT having a bilayer structure.

A preferable BET specific surface area of CNT is, although somewhat varying depending on the type of CNT, greater than or equal to 200 m²/g as an example, and more preferably greater than or equal to 500 m²/g. An upper limit of the BET specific surface area is not particularly limited, and an example thereof is 1500 m²/g. The BET specific surface area is measured in accordance with a BET method (nitrogen adsorption method) described in JIS R1626.

A content rate of CNT in the dispersion (D) is preferably greater than or equal to 0.05 mass% and less than or equal to 20 mass%, and more preferably greater than or equal to 0.1 mass% and less than or equal to 10 mass%. Also, when a conductive agent other than CNT is added, the content rate of the conductive agent is preferably within the above range. The content rate of CNT (conductive agent) within the above range yields a better dispersing property of CNT while keeping good productivity of the dispersion (D), and the effect of reducing DCIR becomes more remarkable. Although somewhat varying depending on the type of CNT, the content rate is particularly preferably greater than or equal to 0.1 mass% and less than or equal to 5 mass% in a case of SWCNT, and particularly preferably greater than or equal to 2 mass% and less than or equal to 7 mass% in a case of MWCNT, for example.

CNT is dispersed in the polar solvent by the function of the dispersant. The CNT fibers are not straightened but dispersed in a state where one or a plurality of fibers are entangled as particles. Thus, CNT is dispersed in the polar solvent with predetermined particle size distribution similarly to particles of the positive electrode active material. The positive electrode active material and CNT are both present in the positive electrode slurry, and the volume-based median diameter (D50) of CNT is smaller than D50 of the positive electrode active material.

The D50 of the conductive agent in a dispersing state in the polar solvent is less than 3 µm, as noted above. When the positive electrode is produced by using the dispersion (D) in which the D50 of the conductive agent is regulated to less than 3 µm, DCIR of the battery may be effectively reduced. The particle size distribution of the conductive agent may be measured by using a laser diffraction-type particle size distribution measuring device (for example, MT3000, manufactured by MicrotracBEL Corp.) similarly to the particle size distribution of the positive electrode active material. As a measurement sample, the dispersion (D) may be used as it is.

The D50 of the conductive agent in the dispersion (D) is more preferably less than 0.8 µm. In this case, the effect of reducing DCIR becomes more remarkable. When only CNT is included as the conductive agent, the D50 of CNT is set to at least less than 3 µm, more preferably less than 0.8 µm. A lower limit of the D50 of the conductive agent (CNT) is not particularly limited, and although varying depending on the fiber length of CNT, an example thereof is 0.1 µm.

The dispersion (D) is prepared by mixing the conductive agent, the dispersant, and the aprotic polar solvent. For mixing (kneading) these raw materials, a conventionally known dispersing device or mixer (hereinafter, referred to as "mixer or the like") may be used. The D50 of the conductive agent varies depending on, for example, the type and amount of the dispersant added, and the dispersant added at a larger amount typically improves the dispersing property of the conductive agent to tend to more reduce the D50.

An example of the mixer or the like is a planetary mixer, a homogenizing mixer, a pin mixer, a high-speed mixer, a disper, a roll mill, a ball mill, a jet mill, and a kneader. Among these, a ball mill is preferably used. The D50 of the conductive agent also varies depending on the mixing condition, and a stronger stirring force by the mixer or the like and a longer mixing time typically tend to reduce the D50. Note that an excessively strong shearing force to act to CNT may cut the fiber, and thereby an appropriate shearing force is applied to the dispersion (D) so that the D50 of CNT is greater than or equal to 0.1 µm and less than 3 µm, more preferably less than 0.8 µm.

### (Dispersant)

The dispersant includes at least nitrile rubber as noted above. Even when the D50 of CNT is regulated to less than 3 µm, it is considered that the good dispersing property of CNT is hardly retained over the manufacturing process of the positive electrode if the dispersion (D) includes no nitrile rubber, and the effect of improving DCIR is not obtained. The nitrile rubber is a copolymer of monomers including an unsaturated nitrile and a conjugated diene as raw materials, and may be a copolymer of substantially only the unsaturated nitrile and the conjugated diene. A mole ratio between the unsaturated nitrile and the conjugated diene is, for example, greater than or equal to 10:90 and less than or equal to 50:50. A weight-average molecular weight of the nitrile rubber is not particularly limited, and an example thereof is greater than or equal to 5000 and less than or equal to 2000000.

The nitrile rubber may be hydrogenated nitrile rubber. The hydrogenated nitrile rubber includes, for example, a structural unit derived from the unsaturated nitrile, a structural unit derived from the conjugated diene, and a structural unit derived from a hydrogenated conjugated diene. An example of the preferable hydrogenated nitrile rubber is a partially hydrogenated nitrile rubber in which greater than or equal to 80 mol% of the structural unit derived from the conjugated diene is hydrogenated. An example of the unsaturated nitrile is acrylonitrile or methacrylonitrile, and preferably acrylonitrile. An example of the conjugated diene is a conjugated diene having greater than or equal to 3 and less than or equal to 6 carbon atoms, and preferably butadiene.

The nitrile rubber is preferably contained at an amount of greater than or equal to 10 parts by mass and less than or equal to 100 parts by mass relative to 100 parts by mass of CNT. The amount is more preferably greater than or equal to 10 parts by mass and less than or equal to 80 parts by mass, and particularly preferably greater than or equal to 20 parts by mass and less than or equal to 50 parts by mass. In this case, the good dispersing state of CNT is easily retained over a long term. The dispersion (D) may include only the nitrile rubber as the dispersant, and another dispersant may be used in combination. A mass proportion of the nitrile rubber in the dispersant is preferably greater than or equal to 30 mass%, and more preferably greater than or equal to 40 mass%.

Examples of the other dispersant used in combination with the nitrile rubber include polyvinyl alcohol, polyvinylpyrrolidone (PVP), a polyalkylene oxide, polyvinyl acetal, polyvinyl ether, cellulose, chitins, chitosans, starch, and derivatives thereof. Among these, PVP or derivatives thereof (PVPs) is preferably used. When the PVPs are used in combination, a mass ratio between the nitrile rubber and the PVPs is, for example, greater than or equal to 40:60 and less than or equal to 60:40. A weight-average molecular weight of the PVPs is not particularly limited, and an example thereof is greater than or equal to 5000 and less than or equal to 1000000.

At least a part of the dispersant may function as the binder of the positive electrode mixture layer. The dispersion (D) may include PVdF or the like, which is added into the positive electrode slurry as the binder.

### (Aprotic Polar Solvent)

The dispersion (D) includes the aprotic polar solvent as a dispersion medium. The aprotic polar solvent may be any solvent that may dissolve the dispersant and disperses CNT. Since the dispersion (D) is added into the positive electrode slurry, this polar solvent is preferably mixable with the solvent of the positive electrode slurry, and may be the same type of the solvent as the solvent of the positive electrode slurry. An example of the aprotic polar solvent is N-methyl-2-pyrrolidone (NMP), methyl ethyl ketone, tetrahydrofuran, dimethylformamide, acetone, ethyl acetate, dimethyl sulfoxide, or the like. Among these, NMP is preferably used.

As the aprotic polar solvent, one type of the solvent may be singly used, or two or more types of the solvent may be used in combination. For example, a mass proportion of NMP in the polar solvent is greater than or equal to 50 mass%, and may be 100 mass%. The polar solvent may be composed of substantially only NMP. A content rate of the polar solvent is, for example, greater than or equal to 80 mass%, preferably greater than or equal to 85 mass% and less than or equal to 99.5 mass%, and more preferably greater than or equal to 90 mass% and less than or equal to 99 mass% of the mass of the dispersion (D).

### [Positive Electrode Slurry]

The positive electrode slurry of the present embodiment includes the dispersion (D) and the lithium-containing transition metal oxide being the positive electrode active material. The positive electrode slurry further includes the binder and a dispersion medium. The positive electrode slurry may be prepared by mixing these raw materials once, or may be prepared by, for example, dry-blending powders of the positive electrode active material and the binder to be added into the dispersion medium, and then mixing the mixture with the dispersion (D). A solid-content concentration of the positive electrode slurry is, for example, greater than or equal to 70 mass% and less than or equal to 90 mass%.

A proportion of the positive electrode active material in the solid content of the positive electrode slurry is, for example, greater than or equal to 90 mass%, preferably greater than or equal to 90 mass% and less than or equal to 99.5 mass%, and more preferably greater than or equal to 95 mass% and less than or equal to 99 mass%. A proportion of the conductive agent in the solid content of the positive electrode slurry is, for example, greater than or equal to 0.05 mass% and less than or equal to 10 mass%, preferably greater than or equal to 0.1 mass% and less than or equal to 8 mass%, and more preferably greater than or equal to 0.5 mass% and less than or equal to 5 mass%. Note that the amount of the dispersion (D) added is regulated so that the content of the conductive agent is within the above range. A proportion of the binder in the solid content of the positive electrode slurry is, for example, greater than or equal to 0.1 mass% and less than or equal to 5 mass%.

The dispersion medium disperses the positive electrode active material and the conductive agent, and dissolves the binder, for example. For the dispersion medium, water, lower alcohols such as ethanol, and the like may be used depending on the type of the binder, and the like, but an aprotic polar solvent is typically used as in the case of the dispersion (D). An example of the dispersion medium is NMP, methyl ethyl ketone, dimethylformamide, or the like. Among these, NMP is preferably used. In the present embodiment, the same type of the dispersion medium (NMP) is used for the dispersion (D) and the positive electrode slurry.

For mixing (kneading) the positive electrode active material, the dispersion (D), the binder, and the dispersion medium, a conventionally known mixer or the like may be used. An example of the mixer or the like is a planetary mixer, a homogenizing mixer, a pin mixer, a high-speed mixer, a disper, a roll mill, a ball mill, a jet mill, and a kneader. Among these, a planetary mixer is preferably used. The planetary mixer is a rotation/revolution-type stirring mixer that can apply strong shearing force to a slurry with a planetarily moving blade.

### EXAMPLES

Hereinafter, the present disclosure will be described in more detail with Examples, but the present disclosure is not limited to these Examples.

### <Example 1>

### [Preparation of Conductive Agent Dispersion]

As a conductive agent, MWCNT (average fiber diameter: 10 nm, average fiber length: 1 µm) was used. As a dispersant, a mixture of hydrogenated nitrile rubber (H-NBR) in which an acrylonitrile-butadiene copolymer was hydrogen-substituted and polyvinylpyrrolidone (PVP) at a mass ratio of 1:1 was used. The conductive agent and the dispersant were dry-blended at a mass ratio of 2:1, this mixed powder was added into N-methyl-2-pyrrolidone (NMP), and kneaded by using a ball mill to obtain a conductive agent dispersion containing the conductive agent at about 5 mass% having D50 of 0.74 µm. The particle size distribution of the conductive agent in the conductive agent dispersion was measured by using MT3000.

### [Preparation of Positive Electrode Slurry]

As a positive electrode active material, a lithium-transition metal oxide represented by the general formula LiNi_{0.9}Co_{0.05}Al_{0.05}O₂ was used. As a binder, polyvinylidene fluoride (PVdF) was used. The positive electrode active material and the binder were dry-blended at a mass ratio of 100: 1, and the mixed powder was added into NMP. Subsequently, the above conductive agent dispersion was added so that a mass ratio between the positive electrode active material and the conductive agent was 100:0.5, and the mixture was kneaded to obtain a positive electrode slurry including the positive electrode active material, the conductive agent, and the binder.

### [Production of Positive Electrode]

The above positive electrode slurry was applied on both surfaces of a positive electrode core composed of aluminum foil, the coating film was dried and compressed, and then the positive electrode core was cut to a predetermined electrode size to obtain a positive electrode in which a positive electrode mixture layer was formed on both the surfaces of the positive electrode core.

### [Production of Negative Electrode]

As a negative electrode active material, graphite was used. The negative electrode active material, a dispersion of styrene-butadiene rubber (SBR), and a sodium salt of carboxymethylcellulose (CMC-Na) were mixed at a solid-content mass ratio of 98:1:1, and water was used as a dispersion medium to prepare a negative electrode slurry. Then, the negative electrode slurry was applied on both surfaces of a negative electrode core composed of copper foil, the coating film was dried and compressed, and then the negative electrode core was cut to a predetermined electrode size to obtain a negative electrode in which a negative electrode mixture layer was formed on both the surfaces of the negative electrode core.

### [Preparation of Non-Aqueous Electrolyte Liquid]

Into a mixed solvent in which ethylene carbonate and ethyl methyl carbonate were mixed at a volume ratio (25°C) of 3:7, LiPF₆ was dissolved at a concentration of 1.2 mol/L to obtain a non-aqueous electrolyte liquid.

### [Production of Test Cell]

The positive electrode in which a lead made of aluminum was welded and the negative electrode in which a lead made of nickel was welded were spirally wound via a separator to produce a wound electrode assembly. This electrode assembly was housed in a bottomed cylindrical exterior housing can, the non-aqueous electrolyte liquid was injected, and then an opening of the exterior housing can was sealed with a sealing assembly via a gasket to obtain a test cell (non-aqueous electrolyte secondary battery).

### <Examples 2 to 5>

Test cells were produced in the same manner as in Example 1 except that a conductive agent dispersion having D50 of the conductive agent of 0.86 µm, 0.94 µm, 1.04 µm, or 2.86 µm was each prepared by changing the kneading condition with the ball mill.

### <Comparative Examples 1 and 3>

Test cells were produced in the same manner as in Example 1 except that, in the preparation of the conductive agent dispersion, H-NBR was not added, and the D50 of the conductive agent was each set to 1.81 µm or 0.51 µm by changing the kneading condition.

### <Comparative Examples 2 and 4>

Test cells were produced in the same manner as in Example 1 except that the D50 of the conductive agent was each set to 4.47 µm or 8.98 µm by changing the kneading condition.

DCIR of each of the test cells of Examples and Comparative Examples was measured by the following method. Table 1 shows the measurement results.

### [Evaluation of DCIR]

Under a temperature environment of 25°C, the evaluation target test cell was CC-charged at a constant current of 0.5 C until a charge depth (SOC) reached 10%, and CC-discharged at a constant current of 0.5 C for 10 seconds. Then, a difference between the open circuit voltage (OCV) and the closed circuit voltage (CCV) after 10 seconds from the discharge was divided by the discharge current after 10 seconds from the discharge, and the resulted value was calculated as DCIR. Then, the value of each of Examples and each of Comparative Examples was evaluated as a value relative to a DCIR value of Comparative Example 1 being 100.

**[Table 1]**

| | Conductive agent dispersion | | Test cell |
|---|---|---|---|
| | H-NBR | D50 (µm) | DCIR (m Ω) |
| Example 1 | Present | 0.74 | 91.3 |
| Example 2 | Present | 0.86 | 94.5 |
| Example 3 | Present | 0.94 | 95.4 |
| Example 4 | Present | 1.04 | 92.7 |
| Example 5 | Present | 2.86 | 94.1 |
| Comparative Example 1 | Absent | 1.81 | 100 |
| Comparative Example 2 | Present | 4.47 | 153.8 |
| Comparative Example 3 | Absent | 0.51 | 108.9 |
| Comparative Example 4 | Present | 8.98 | 110.3 |

As shown in Table 1, all the test cells of Examples result in low DCIR with low SOC compared with the test cells of Comparative Examples. Particularly, when the D50 of CNT in the dispersion was less than 0.8 µm (see Example 1), the effect of reducing DCIR was more remarkable. In the state of SOC of 50%, no significant difference of DCIR was observed between, for example, the test cell of each of Examples and the test cells of Comparative Examples 2 and 4 produced by using the dispersion including H-NBR.

It is understood from Comparative Examples 2 and 4, the D50 of CNT of greater than 3 µm, specifically greater than or equal to 4 µm, considerably increases DCIR.

More interestingly, use of the dispersion having D50 of CNT of about greater than or equal to 4 µm and less than or equal to 6 µm yields larger increase in DCIR than that in the case of using the dispersion having D50 of about greater than or equal to 8 µm and less than or equal to 10 µm. That is, with D50 of CNT of greater than or equal to 3 µm and less than or equal to 10 µm, the smaller the D50, the larger the DCIR.

From Comparative Examples 1 and 3, the dispersion containing no H-NBR fails to obtain the effect of reducing DCIR as Examples even with CNT having D50 of less than 3 µm. It is considered that, if the dispersion containing no H-NBR is used, the good dispersing state of CNT cannot be stably retained until manufacture of the positive electrode, which causes aggregation of CNT to increase DCIR.

## Claims

1. A conductive agent dispersion, including:
a conductive agent;
a dispersant; and
an aprotic polar solvent, wherein
the conductive agent contains carbon nanotube as a main component,
the dispersant includes nitrile rubber, and
a volume-based median diameter of the conductive agent in a dispersing state in the polar solvent is less than 3 µm.

2. The conductive agent dispersion according to claim 1, wherein the volume-based median diameter of the conductive agent in the dispersing state in the polar solvent is less than 0.8 µm.

3. The conductive agent dispersion according to claim 1 or 2, wherein the nitrile rubber is hydrogenated nitrile rubber.

4. The conductive agent dispersion according to claim 1 or 2, wherein a content rate of the carbon nanotube is greater than or equal to 0.05 mass% and less than or equal to 20 mass%.

5. The conductive agent dispersion according to claim 1 or 2, wherein the nitrile rubber is contained at an amount of greater than or equal to 10 parts by mass and less than or equal to 100 parts by mass relative to 100 parts by mass of the carbon nanotube.

6. The conductive agent dispersion according to claim 1 or 2, wherein the carbon nanotube has an average fiber diameter of less than or equal to 20 nm.

7. A positive electrode slurry for a non-aqueous electrolyte secondary battery, including:
the conductive agent dispersion according to claim 1; and
a lithium-containing transition metal oxide.

8. A method for manufacturing a positive electrode for a non-aqueous electrolyte secondary battery, the method using the positive electrode slurry according to claim 7 and the method comprising:
applying the positive electrode slurry on a surface of a positive electrode core; and
drying a coating film to form a positive electrode mixture layer.

9. A positive electrode for a non-aqueous electrolyte secondary battery, wherein the positive electrode is manufactured by using the positive electrode slurry according to claim 7.

10. A non-aqueous electrolyte secondary battery, including the positive electrode for a non-aqueous electrolyte secondary battery according to claim 9.
